(19) Europäisches Patentamt
European Patent Office
Office européen des brevets

(11) **EP 2 096 409 B1**

(12) **EUROPEAN PATENT SPECIFICATION**

(45) Date of publication and mention
of the grant of the patent:
**23.03.2011 Bulletin 2011/12**

(51) Int Cl.:
**G01C 19/72** *(2006.01)* **G02B 6/12** *(2006.01)*

(21) Application number: **09152742.4**

(22) Date of filing: **12.02.2009**

(54) **Stitched waveguide for use in a fiber-optic gyroscope**

Gehefteter Wellenleiter zur Verwendung in einem faseroptischen Gyroskop

Guide d'onde piqué pour une utilisation dans un gyroscope à fibres optiques

(84) Designated Contracting States:
**DE FR GB IT**

(30) Priority: **29.02.2008 US 40866**

(43) Date of publication of application:
**02.09.2009 Bulletin 2009/36**

(73) Proprietor: **Honeywell International Inc.**
**Morristown, NJ 07962 (US)**

(72) Inventor: **Feth, John**
**Morristown, NJ 07962-2245 (US)**

(74) Representative: **Buckley, Guy Julian**
**Patent Outsourcing Limited**
**1 King Street**
**Bakewell**
**Derbyshire DE45 1DZ (GB)**

(56) References cited:
**US-A- 5 875 276** **US-A- 5 982 964**
**US-A1- 2004 091 207**

**Description**

**BACKGROUND OF THE INVENTION**

A fiber optic gyroscope (FOG) uses the interference of light to measure angular velocity. Rotation is sensed in a FOG with a large coil of optical fiber forming a Sagnac interferometer. To measure rotation, two light beams are introduced into the coil in opposite directions by an electro-optic modulating device such as an integrated optical circuit (IOC). If the coil is undergoing a rotation, then the beam traveling in the direction of rotation will experience a longer path to the other end of the fiber than the beam traveling against the rotation. This is known as the Sagnac effect. As the beams exit the fiber they are combined in the IOC, and the phase shift between the counter-rotating beams due to the Sagnac effect and modulation in the IOC causes the beams to interfere, resulting in a combined beam, the intensity and phase of which depends on the angular velocity of the coil.

When testing FOGs using a proton exchanged IOC in a vacuum environment, it has been found that a corruption of the electro-optic modulation occurred and grew with time, eventually rendering the FOG inoperable. The exact phenomenon that corrupts the modulation in FOG output is only partially understood and appears to involve ionic migration along the electric fields near the electrodes of the IOC.

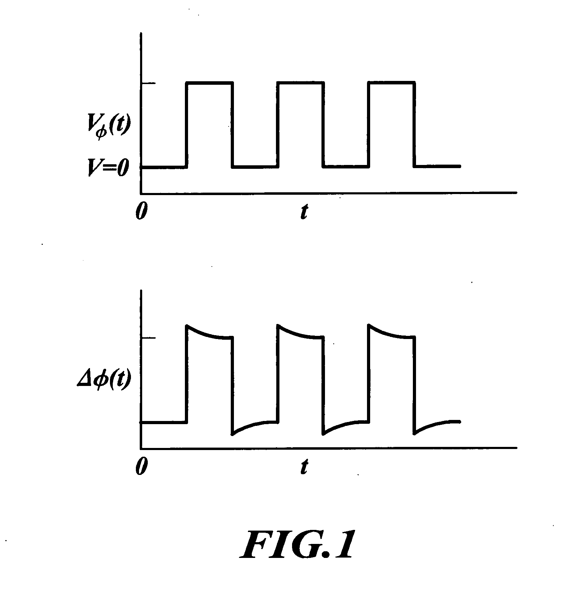

Referring to FIG. 1, in a $LiNbO_3$ IOC, when a voltage is applied across a waveguide between electrodes parallel to the waveguide, the piezo-electric effect changes the spacing between the atoms in the poled molecules, which in turn changes the refractive index. This effect enables phase modulation, $\phi(t)$, of an electromagnetic wave transiting the waveguide.

Normally, in a $LiNbO_3$ IOC the response of the refractive index to the electric field applied to the electrodes follows the voltage very accurately. However, after soaking in a vacuum, the phenomenon called RDS manifests itself and corrupts the response.

More specifically, the voltage $V_\phi(t)$, where $t$ is time, across the electrodes changes the phase of light in a waveguide by $\Delta\phi$. During normal IOC operation in air, $\Delta\phi(t)$ follows the shape of the trace of $V_\phi(t)$ exactly. After the IOC has been in vacuum for a nominal time, instead of following $V_\phi(t)$, $\Delta\phi(t)$ is corrupted, as shown in the lower trace as $\Delta\phi(t)$, and overshoots the desired $\Delta\phi$ at both the up and down voltage steps.

**SUMMARY OF THE INVENTION**

In an embodiment, an integrated optical circuit includes a first waveguide portion of a first material. The first waveguide portion includes an input-port section terminating in a junction section of the first waveguide portion from which first and second branch sections of the first waveguide portion are formed. Second and third waveguide portions are respectively coupled to the first and second branch sections. The second and third waveguide portions are diffused with a second material different from the first material. First and second modulators are respectively coupled to the second and third waveguide portions. Each of the modulators provides respective modulating voltages generating respective electric fields across the second and third waveguide portions. The second and third waveguide portions are coupled to the first and second branch sections at respective locations where the modulating electric fields are substantially zero.

**BRIEF DESCRIPTIONS OF THE DRAWINGS**

Preferred and alternative embodiments of the present invention are described in detail below with reference to the following drawings:

FIGURE 1 illustrates in graphical form the RDS effect of corrupted modulation in an IOC;

FIGURE 2 illustrates a FOG according to an embodiment of the present invention;

FIGURE 3 illustrates an IOC according to an embodiment of the present invention; and

FIGURE 4 illustrates the extinction ratio of a misaligned stitch.

**DETAILED DESCRIPTION OF THE PREFERRED EMBODIMENT**

As will be described more fully hereinafter, an optical circuit of a Sagnac gyroscope according to an embodiment may be comprised of an IOC, a light source, polarizing circulator, detector, and fiber coil. An embodiment may employ crystalline $LiNbO_3$ integrated IOCs useful in navigation grade gyros because an applied voltage changes the refractive index of the $LiNbO_3$. This property provides superior performance in closed loop gyros by allowing fast, accurate, and sophisticated modulation of light transiting the rate-sensing coil.

Early work with $LiNbO_3$ created IOCs by diffusing titanium (Ti) waveguides into $LiNbO_3$ designed to create a y-junction. A fiber containing light from a fiber laser is attached to the single tail of the y, and the two ends of a fiber coil were attached to the two outputs of the y-junction. Low voltage waveforms on the electrodes, parallel and close to the waveguides, change the refractive index of the waveguide and allow precise phase modulation between the clockwise and counterclockwise light beams propagating in the fiber coil.

Using a proton exchange process on $LiNbO_3$ to create waveguides has a distinct benefit: light of only one polarization is transmitted through the IOC. This greatly increases the precision of the fiber optic gyro rate measurement to a level necessary for the most demanding navigation requirements and, in an embodiment, eliminates the need for an external polarizer in the gyro circuit.

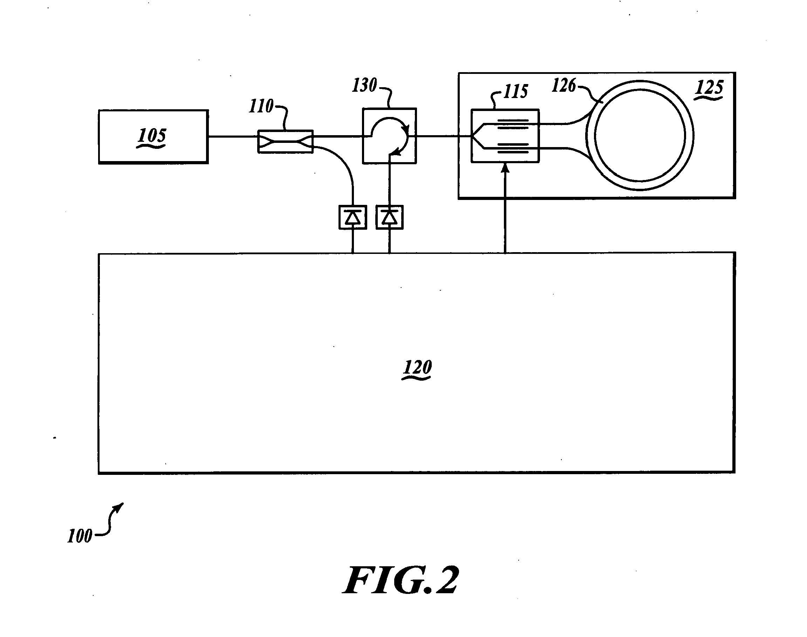

FIG. 2 illustrates a FOG system 100 according to an embodiment of the present invention. A light source 105 provides an optical signal or beam to an optional coupler 110, which may function to redirect a portion of the beam to a detector 120. The remainder of the beam may be supplied to an IOC 115 of a sensing-loop assembly 125, having a fiber coil 126, via a circulator element 130 that is, in turn, coupled to the detector 120.

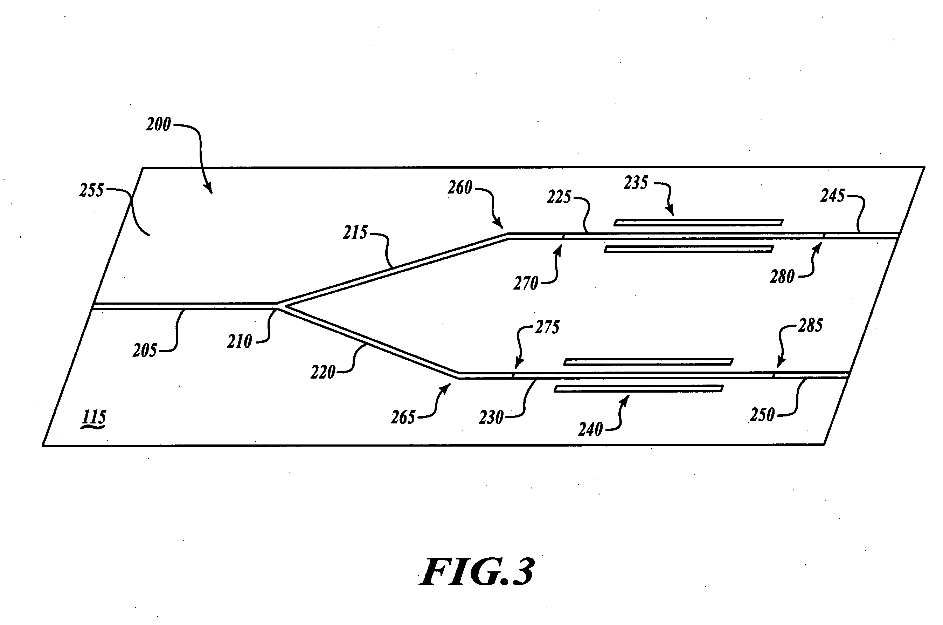

FIG. 3 illustrates an IOC 115 according to an embodiment of the invention. The IOC 115 includes a first proton-exchanged waveguide portion 200. The first waveguide portion 200 includes an input-port section 205 terminating in a junction section (y-junction) 210 from which first and second branch sections 215, 220 are formed. The first and second branch sections 215, 220 include respective bent regions 260, 265. The bent regions 260, 265 may have an angular "elbow" configuration as illustrated in FIG. 3, or may be configured with a less-severe, more rounded radius of curvature than that illustrated.

Titanium-difftised waveguide portions 225, 230 are respectively coupled to the first and second branch sections 215, 220. First and second modulators, such as electrodes 235, 240, are respectively coupled to the waveguide portions 225, 230. Each of the electrodes 235, 240 provide respective modulating voltages generating respective electric fields. The IOC 115 may further include second and third proton-exchanged waveguide portions 245, 250 coupled to the waveguide portions 225, 230.

An approach to solving the RDS problem for gyroscopes includes, in an embodiment, a method called "stitching." Stitching involves creating connected segments of Ti-diffused and proton-exchanged waveguides on the same substrate 255.

Referring again to FIG. 3, in an embodiment, the waveguide portions 225, 230 are stitched, or otherwise coupled, to the first and second branch sections 215, 220 at respective locations 270, 275 where the electric fields produced by the electrodes 235, 240 are substantially zero. Additionally, the second and third proton-exchanged waveguide portions 245, 250 are stitched to the waveguide portions 225, 230 at respective locations 280, 285 where the electric fields produced by the electrodes 235, 240 are substantially zero. As such, the stitching occurs far enough from the electrodes 235, 240 such that the proton-exchanged waveguides 200, 245, 250 are unaffected by electric fields associated with modulation voltages.

Additionally, and preferably, the respective locations 270, 275 are approximately halfway between the electrodes 235, 240 and the bent regions 260, 265. As such, the stitching occurs a distance away from the bent regions 260, 265 sufficient to avoid modal transition effects that may occur at the bent regions.

Further advantages to the approach illustrated in FIG. 3 may be described in the following context:

Linearly polarized light propagating along the fast or slow axis of a birefringent material such as LiNbO$_3$ will remain in that axis, as coupling between the axes cannot occur for the reason that it is not possible to phase match the light in both beams simultaneously.

Since waveguides may be physically formed by well known processes for diffusing Ti or H+ along the crystal planes which develop the birefringence in the crystal, the angular alignment between the fast and slow axes of the stitched waveguides is virtually perfect, a property that maintains the very high extinction ratio provided by the proton exchange waveguides.

In anisotropic substances such as a birefringent crystal, electric vectors oscillate normal to the propagation vector in orthogonal planes (H and V). The azimuths and refractive indices of H and V are determined by the stoichiometric arrangement of the molecules comprising the crystal. The refractive index is proportional to the area density of atoms in the respective H and V planes (viz., atoms/mm$^2$); the birefringence is proportional to the difference of the refractive indices along the planes.

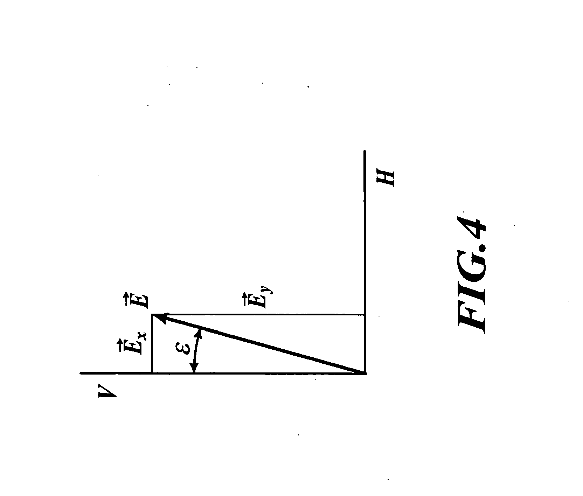

FIG. 4 illustrates the extinction ratio of a misaligned stitch. The extinction ratio obtained at a stitch is determined by angular misalignment $\varepsilon$ of the field oscillations with respect to the axes in the crystal and is the ratio of the intensities in the H- and V-axes as follows:

$$\frac{I_x}{I_y} = \left[\frac{E_x}{E_y}\right]^2 = \tan^2[\varepsilon] \sim \varepsilon^2 ,$$

for small $\varepsilon$. The extinction ratio is commonly expressed in decibels (dB) as $10 \cdot \log[\varepsilon^2]$.

In the embodiment illustrated in FIG. 3, the stitching occurs in portions of the waveguides that are parallel, or very nearly parallel, to the crystal planes.

Moreover, the LiNbO$_3$ crystal planes determine the alignment of both the birefringent axes in Ti-diffused waveguides, and the pass axis of the light in proton-exchanged waveguides. This makes the angular alignement at the stitch nearly perfect, thus avoiding gyro rate errors due to angular misalignments in the IOC.

Additionally, the extinction ratio of the stitched waveguide IOC 115, which includes polarizing proton-exchanged waveguides and Ti-diffused waveguides, is substantially the same as that of a proton-exchanged IOC.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. An integrated optical circuit (115), comprising:

   a first waveguide portion (200) of a first material, the first waveguide portion (200) including an input-port section (205) terminating in a junction section (210) from which first and second branch sections (215, 220) are formed; second and third waveguide portions (225, 230) respectively coupled to the first and second branch sections (215, 220), the second and third waveguide portions (225, 230) being diffused with a second material different from the first material; and first and second modulators (235, 240) respectively coupled to the second and third waveguide portions (225, 230), each of the modulators (235, 240) providing respective modulating voltages generating respective electric fields; wherein the second and third waveguide portions (225, 230) are coupled to the first and second branch sections (215, 220) at respective locations where the electric fields are substantially zero.

2. The circuit (115) of claim 1 wherein the modulators (235, 240) comprise electrodes.

3. The circuit (115) of claim 1 wherein the first waveguide portion (200) comprises a proton-exchanged waveguide portion.

4. The circuit (115) of claim 1 wherein the second material comprises titanium.

5. The circuit (115) of claim 1, further comprising fourth and fifth waveguide portions (245, 250) of the first material coupled to the second and third waveguide portions (225, 230), each said fourth and fifth waveguide portion (245, 250) including a respective output port.

6. The circuit (115) of claim 5 wherein the fourth and fifth waveguide portions (245, 250) comprise proton-exchanged waveguide portions.

7. The circuit (115) of claim 5 wherein the fourth and fifth waveguide portions (245, 250) are coupled to the second and third waveguide portions (225, 230) at respective locations where the electric fields are substantially zero.

8. The circuit (115) of claim 1 wherein:

   the first and second branch sections (215, 220) include respective bent regions (260, 265); and the second and third waveguide portions (225, 230) are further coupled to the first and second branch sections (215, 220) at respective locations approximately halfway between the first and second modulators (235, 240) and the bent regions (260, 265).

9. A sensing-loop assembly (125) for a fiber optic gyroscope (FOG), the assembly (125) comprising:

   a rate-sensing fiber-optic coil (126); and an integrated optical circuit (115) coupled to the coil (126), the circuit (115) comprising:

   a first waveguide portion (200) of a first material, the first waveguide portion (200) including an input-port section (205) terminating in a junction section (210) from which first and second branch sections (215, 220) are formed; second and third waveguide portions (225, 230) respectively coupled to the first and second branch sections (215, 220), the second and third waveguide portions (225, 230) being diffused with a second material different from the first material; and first and second modulators (235, 240) respectively coupled to the second and third waveguide portions (225, 230), each of the modulators (235, 240) providing respective modulating voltages generating respective electric fields; wherein the second and third waveguide portions (225, 230) are coupled to the first and second branch sections (215, 220) at respective locations where the electric fields are substantially zero.

10. The assembly (125) of claim 9 wherein the modulators (235, 240) comprise electrodes.

## Patentansprüche

1. Integrierte optische Schaltung (115), die enthält:

   einen ersten Wellenleiterteil (200) aus einem ersten Material, wobei der erste Wellenleiterteil (200) einen Eingangabschnitt (205) enthält, der in einem Abzweigungsabschnitt (210) endet, von dem aus ein erster und ein zweiter Zweigabschnitt (215, 220) geformt sind; einen zweiten und einen dritten Wellenleiterteil (225, 230), die mit dem ersten bzw. dem zweiten Zweigabschnitt (215, 220) gekoppelt sind, wobei der zweite und der dritte Wellenleiterteil (225, 230) mit einem zweiten Material diffundiert sind, das sich vom ersten Material unterscheidet; und

einen ersten und einen zweiten Modulator (235, 240), die mit dem zweiten bzw. dem dritten Wellenleiterteil (225, 230) gekoppelt sind, wobei jeder der Modulatoren (235, 240) modulierende Spannungen liefert, die elektrische Felder erzeugen;

wobei der zweite und der dritte Wellenleiterteil (225, 230) mit dem ersten und dem zweiten Zweigabschnitt (215, 220) an Stellen gekoppelt sind, wo die elektrischen Felder im Wesentlichen Null sind.

2. Schaltung (115) nach Anspruch 1, bei der die Modulatoren (235, 240) Elektroden enthalten.

3. Schaltung (115) nach Anspruch 1, bei der der erste Wellenleiterteil (200) einen Protonenaustausch-Wellenleiterteil enthält.

4. Schaltung (115) nach Anspruch 1, bei der das zweite Material Titan enthält.

5. Schaltung (115) nach Anspruch 1, die weiter einen vierten und einen fünften Wellenleiterteil (245, 250) aus dem ersten Material gekoppelt mit dem zweiten und dem dritten Wellenleiterteil (225, 230) enthält, wobei jeder der vierten und fünften Wellenleiterteile (245, 250) einen jeweiligen Ausgang enthält.

6. Schaltung (115) nach Anspruch 5, wobei der vierte und der fünfte Wellenleiterteil (245, 250) Protonenaustausch-Wellenleiterteile enthalten.

7. Schaltung (115) nach Anspruch 5, wobei der vierte und der fünfte Wellenleiterteil (245, 250) mit dem zweiten und dem dritten Wellenleiterteil (225, 230) an Stellen gekoppelt sind, wo die elektrischen Felder im Wesentlichen Null sind.

8. Schaltung (115) nach Anspruch 1, wobei:

der erste und der zweite Zweigabschnitt (215, 220) gekrümmte Bereiche (260, 265) enthalten; und

der zweite und der dritte Wellenleiterteil (225, 230) weiter mit dem ersten und dem zweiten Zweigabschnitt (215, 220) an Stellen in etwa auf halber Strekke zwischen dem ersten und dem zweiten Modulator (235, 240) und den gekrümmten Bereichen (260, 265) gekoppelt sind.

9. Erfassungsschleifenanordnung (125) für einen faseroptischen Kreisel (FOG), wobei die Anordnung (125) enthält:

eine Geschwindigkeit erfassende faseroptische Spule (126); und
eine mit der Spule (126) gekoppelte integrierte optische Schaltung (115), wobei die Schaltung (115) enthält:

einen ersten Wellenleiterteil (200) aus einem ersten Material, wobei der erste Wellenleiterteil (200) einen Eingangsabschnitt (205) enthält, der in einem Abzweigungsabschnitt (210) endet, von dem aus ein erster und ein zweiter Zweigabschnitt (215, 220) geformt sind;
einen zweiten und einen dritten Wellenleiterteil (225, 230), die mit dem ersten bzw. dem zweiten Zweigabschnitt (215, 220) gekoppelt sind, wobei der zweite und der dritte Wellenleiterteil (225, 230) mit einem zweiten Material diffundiert sind, das sich vom ersten Material unterscheidet; und
einen ersten und einen zweiten Modulator (235, 240), die mit dem zweiten bzw. dem dritten Wellenleiterteil (225, 230) gekoppelt sind, wobei jeder der Modulatoren (235, 240) modulierende Spannungen liefert, die elektrische Felder erzeugen;
wobei der zweite und der dritte Wellenleiterteil (225, 230) mit dem ersten und dem zweiten Zweigabschnitt (215, 220) an Stellen gekoppelt sind, wo die elektrischen Felder im Wesentlichen Null sind.

10. Anordnung (125) nach Anspruch 9, bei der die Modulatoren (235, 240) Elektroden enthalten.

**Revendications**

1. Circuit optique intégré (115), comprenant :

une première portion de guide d'ondes (200) dans un premier matériau, la première portion de guide d'ondes (200) comprenant une section d'orifice d'entrée (205) se terminant en une section de jonction (210) à partir de laquelle sont formées une première et une deuxième section de ramification (215, 220) ;
une deuxième et une troisième portion de guide d'ondes (225, 230) respectivement couplées à la première et la deuxième section de ramification (215, 220), la deuxième et la troisième portion de guide d'ondes (225, 230) étant diffusées avec un deuxième matériau différent du premier matériau ; et
un premier et un deuxième modulateur (235, 240) respectivement couplés à la deuxième et la troisième portion de guide d'ondes (225, 230), chacun des modulateurs (235, 240) fournissant des tensions de modulation respectives générant des champs électriques respectifs ;
dans lequel la deuxième et la troisième portion de guide d'ondes (225, 230) sont couplées à la première et la deuxième section de ramification (215, 220) à des emplacements respectifs où les champs électriques sont sensiblement nuls.

**2.** Circuit (115) selon la revendication 1 dans lequel les modulateurs (235, 240) comprennent des électrodes.

**3.** Circuit (115) selon la revendication 1 dans lequel la première portion de guide d'ondes (200) comprend une portion de guide d'ondes réalisée par échange protonique.

**4.** Circuit (115) selon la revendication 1 dans lequel le deuxième matériau comprend du titane.

**5.** Circuit (115) selon la revendication 1, comprenant en outre une quatrième et une cinquième portion de guide d'ondes (245, 250) dans le premier matériau couplées à la deuxième et la troisième portion de guide d'ondes (225, 230), chacune desdites quatrième et cinquième portions de guide d'ondes (245, 250) comprenant un orifice de sortie respectif.

**6.** Circuit (115) selon la revendication 5 dans lequel la quatrième et la cinquième portion de guide d'ondes (245, 250) comprennent des portions réalisées par échange protonique.

**7.** Circuit (115) selon la revendication 5 dans lequel la quatrième et la cinquième portion de guide d'ondes (245, 250) sont couplées à la deuxième et la troisième portion de guide d'ondes (225, 230) à des emplacements respectifs où les champs électriques sont sensiblement nuls.

**8.** Circuit (115) selon la revendication 1 dans lequel :

la première et la deuxième section de ramification (215, 220) comprennent des régions coudées respectives (260, 265) ; et
la deuxième et la troisième portion de guide d'ondes (225, 230) sont en outre couplées à la première et la deuxième section de ramification (215, 220) à des emplacements respectifs approximativement à mi-chemin entre les premier et deuxième modulateurs (235, 240) et les régions coudées (260, 265).

**9.** Ensemble boucle de détection (125) pour un gyroscope à fibre optique (FOG), l'ensemble (125) comprenant :

une bobine de fibre optique détectant la vitesse (126) ; et
un circuit optique intégré (115) couplé à la bobine (126), le circuit (115) comprenant :

une première portion de guide d'ondes (200) dans un premier matériau, la première portion de guide d'ondes (200) comprenant une section d'orifice d'entrée (205) se terminant en une section de jonction (210) à partir de laquelle sont formées une première et une deuxième section de ramification (215, 220) ;
une deuxième et une troisième portion de guide d'ondes (225, 230) respectivement couplées à la première et la deuxième section de ramification (215, 220), la deuxième et la troisième portion de guide d'ondes (225, 230) étant diffusées avec un deuxième matériau différent du premier matériau ; et
un premier et un deuxième modulateur (235, 240) respectivement couplés à la deuxième et la troisième portion de guide d'ondes (225, 230), chacun des modulateurs (235, 240) fournissant des tensions de modulation respectives générant des champs électriques respectifs ;
dans lequel la deuxième et la troisième portion de guide d'ondes (225, 230) sont couplées à la première et la deuxième section de ramification (215, 220) à des emplacements respectifs où les champs électriques sont sensiblement nuls.

**10.** Ensemble (125) selon la revendication 9 dans lequel les modulateurs (235, 240) comprennent des électrodes.

FIG.1

*FIG.2*

**FIG.3**

EP 2 096 409 B1

FIG.4